(19) Europäisches Patentamt
European Patent Office
Office européen des brevets

(11) **EP 4 600 765 A1**

(12) **EUROPÄISCHE PATENTANMELDUNG**

(43) Veröffentlichungstag:
**13.08.2025 Patentblatt 2025/33**

(21) Anmeldenummer: **24156540.7**

(22) Anmeldetag: **08.02.2024**

(51) Internationale Patentklassifikation (IPC):
**G05B 13/02** *(2006.01)* **B25J 9/16** *(2006.01)*

(52) Gemeinsame Patentklassifikation (CPC):
**G05B 13/027;** B25J 9/163; G05B 2219/33056

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Siemens Aktiengesellschaft**
**80333 München (DE)**

(72) Erfinder:
• **Swazinna, Phillip**
**85375 Neufahrn (DE)**
• **Udluft, Steffen**
**82223 Eichenau (DE)**

(74) Vertreter: **Siemens Patent Attorneys**
**Postfach 22 16 34**
**80506 München (DE)**

(54) **STEUERN EINER MASCHINE MIT LERNBASIERTER STEUEREINRICHTUNG**

(57) Die Erfindung betrifft ein computerimplementiertes Verfahren zum Steuern einer Maschine (M) mittels einer trainierten lernbasierten Steuereinrichtung (CTL), wobei das Training der Steuereinrichtung (CTL) unter Verwendung einer Zielfunktion erfolgt ist, welche eine Gewichtung einer Performanz der Maschine (M) gegenüber einer Abweichung von einer bestimmten Aktionsauswahlregel beinhaltet. Zur Steuerung der Maschine (M) ermittelt die zuvor trainierte Steuereinrichtung (CTL) basierend auf ihr zur Verfügung gestellten Betriebs-Zustandssignalen (SO) der Maschine (M) und Werten für die Gewichtung Betriebs-Steuersignale (AO) und gibt diese aus. Hierbei werden diese Werte für die Gewichtung von der Steuereinrichtung (CTL) bestimmt, indem eine Fehlergröße berechnet wird betreffend eine Vorhersage von Zustandssignalen durch die Steuereinrichtung (CTL) gegenüber Betriebs-Zustandssignalen (SO) der Maschine (M). Weiterhin betrifft die Erfindung hierzu korrespondierend eine Steuereinrichtung (CTL), ein Computerprogramm, einen computerlesbaren Datenträger, sowie ein Übertragungssignal.

**FIG 1**

**Beschreibung**

Die Erfindung betrifft ein computerimplementiertes Verfahren zum Steuern einer Maschine mittels einer lernbasierten Steuereinrichtung. Hierbei werden Betriebs-Zustandssignale der Maschine der zuvor trainierten Steuereinrichtung zur Verfügung gestellt und daraufhin Betriebs-Steuersignale von der Steuereinrichtung der Maschine zugeführt.

Zum Steuern von komplexen technischen Systemen, wie z.B. Robotern, Motoren, Fertigungsanlagen, Energieversorgungseinrichtungen, Gasturbinen, Windturbinen, Dampfturbinen, Fräsmaschinen oder anderen Maschinen werden im zunehmenden Maße datengetriebene Verfahren des maschinellen Lernens, insbesondere Verfahren des bestärkenden Lernens eingesetzt. Hierbei werden Steuerungsagenten, insbesondere künstliche neuronale Netze, anhand einer großen Menge von Trainingsdaten darauf trainiert, für einen jeweiligen Zustand des technischen Systems ein hinsichtlich einer vorgegebenen Zielfunktion optimiertes Steuersignal zum Steuern des technischen Systems zu generieren. Es kommen also Steuereinrichtungen zum Steuern technischer Systeme in Form von trainierten Steuerungsagenten, auch als Policy bezeichnet, zum Einsatz.

Durch die beim Training eingesetzte Zielfunktion kann insbesondere eine zu optimierende Performanz des technischen Systems, z.B. eine Leistung, ein Wirkungsgrad, ein Ressourcenverbrauch, eine Ausbeute, ein Schadstoffausstoß, eine Produktqualität und/oder andere Betriebsparameter des technischen Systems bewertet werden. Eine solche Zielfunktion wird häufig auch als Belohnungsfunktion, Kostenfunktion oder Verlustfunktion bezeichnet. Mittels eines solchen performanzoptimierenden Steuerungsagenten lässt sich die Performanz eines damit gesteuerten technischen Systems in vielen Fällen signifikant erhöhen. Doch birgt der produktive Einsatz eines solchen Steuerungsagenten auch Risiken, weil die ausgegebenen Betriebs-Zustandssignale häufig nicht erprobt und damit möglicherweise unzuverlässig oder hinsichtlich ihrer Folgen für den Zustand des technischen Systems schwer einzuschätzen sind. Dies gilt insbesondere unter Betriebsbedingungen, die von den Trainingsdaten nicht ausreichend abgedeckt sind. Daher wird erwogen, die Steuerung zumindest teilweise an vorgegebenen Aktionsauswahlregeln zu orientieren. Hierfür liegen also Regeln vor, welches Betriebs-Steuersignal bei Vorliegen eines bestimmten Betriebs-Zustandssignals ergehen soll.

Dabei kann es sich z.B. um einen von einem Nutzer zuvor durchgeführten Steuerablauf handeln.

Der Erfindung liegt die Aufgabe zugrunde, ein Verfahren zum Steuern mittels einer lernbasierten Steuereinrichtung aufzuzeigen, das ein effizientes und sicheres Steuern einer Maschine ermöglicht.

Diese Aufgabe wird durch ein Verfahren mit den Merkmalen des Anspruchs 1 gelöst. Ferner sind Gegenstand der Erfindung eine entsprechende Steuereinrichtung, ein entsprechendes Computerprogramm, ein entsprechendes computerlesbares, vorzugsweise nichtflüchtiges, Speichermedium, und ein entsprechendes Übertragungssignal. Vorteilhafte Ausgestaltungen und Weiterbildungen sind Gegenstand von Unteransprüchen.

Bei dem erfindungsgemäßen computerimplementierten Verfahren zum Steuern einer Maschine mittels einer trainierten lernbasierten Steuereinrichtung ist zuvor das Training der Steuereinrichtung unter Verwendung einer Zielfunktion erfolgt, wobei diese Zielfunktion eine Gewichtung einer Performanz der Maschine gegenüber einer Abweichung von einer bestimmten Aktionsauswahlregel beinhaltet. Bei dem Verfahren zur Steuerung der Maschine ermittelt die zuvor trainierte Steuereinrichtung basierend auf ihr zur Verfügung gestellten Betriebs-Zustandssignalen der Maschine und Werten für die Gewichtung Betriebs-Steuersignale und gibt sie aus. Hierbei werden diese Werte für die Gewichtung von der Steuereinrichtung bestimmt, indem eine Fehlergröße berechnet wird betreffend eine Vorhersage von Zustandssignalen durch die Steuereinrichtung gegenüber Betriebs-Zustandssignalen der Maschine.

Der Steuereinrichtung ist der Zustand der Maschine insofern bekannt, als er durch das zuletzt empfangene Betriebs-Zustandssignal beschrieben wird. Basierend hierauf und auf einem Wert für die Gewichtung ermittelt die Steuereinrichtung eine an oder von der Maschine vorzunehmende Aktion, beschrieben durch das von der Steuereinrichtung ausgegebene Betriebs-Steuersignal. Diese Ermittlung eines geeigneten Betriebs-Steuersignals kann erfolgen, da die Steuereinrichtung während dem Training die Ermittlung von Betriebs-Steuersignalen erlernt hat, welche die Zielfunktion optimieren.

In die beim Training verwendete Zielfunktion gehen zwei Größen ein, und zwar einerseits die Performanz der Maschine und andererseits eine Abweichung von einer bestimmten Aktionsauswahlregel. Bei letzterer handelt es sich um eine Vorgabe, welches Betriebs-Steuersignal bei Vorliegen eines bestimmten Betriebs-Zustandssignals ergehen soll. Hiermit werden die Ziele einer möglichst großen Performanz und einer möglichst kleinen Abweichung von der bestimmten Aktionsauswahlregel verfolgt. Da diese beiden Ziele nicht in jeder Situation gleich wichtig sind, erfolgt eine Gewichtung, so dass je nach verwendetem Wert für die Gewichtung eines der beiden Ziele mehr betont werden kann als das andere, oder sogar eines der beiden Ziele keine Rolle spielt und nur das andere Ziel berücksichtigt wird.

Ein Wert für die Gewichtung wird von der Steuereinrichtung auch zum Steuern der Maschine verwendet. Diesem Wert entsprechend erfolgt auch die Steuerung der Maschine an den beiden erläuterten Zielen orientiert. Der hierfür verwendete Wert für die Gewichtung kann im Laufe der Zeit geändert werden. Hierzu ist es nötig, den zu verwendenden Wert für die Gewichtung zu bestimmen. Diese Bestimmung erfolgt durch die Steuereinrichtung, d.h. die Steuereinrichtung gibt sich selbst vor, welche Gewichtung der beiden Ziele zum Einsatz kommt. Dies schließt jedoch nicht aus, dass zeitweise ein Nutzer eingreifen und die Gewichtung vorgeben kann.

Zur Bestimmung des Wertes für die Gewichtung ermittelt die Steuereinrichtung eine Fehlergröße. Mittels dieser Fehlergröße wird eine Vorhersage von Zustandssignalen durch die Steuereinrichtung verglichen mit Betriebs-Zustandssignalen der Maschine. Dies beruht darauf, dass die Steuerung umso besser ist, je besser die Steuereinrichtung prädizieren kann, welchen Zustand die Maschine haben wird, wenn ausgehend vom einem einem bestimmten Betriebs-Zustandssignal entsprechenden Zustand eine einem bestimmten Betriebs-Steuersignal entsprechende Aktion durchgeführt wird. Außer der Prädiktion der Zustandssignale kann auch die Prädiktion der Performanz der Maschine in die Fehlergröße einbezogen werden.

Bei der gesteuerten Maschine kann es sich z.B. um einen Roboter, einen Motor, eine Fertigungsanlage, eine Fabrik, eine Energieversorgungseinrichtung, eine Gasturbine, eine Windturbine, eine Dampfturbine oder eine Fräsmaschine handeln. Es ist möglich, dass die Steuereinrichtung in die Maschine integriert ist.

Vorzugsweise wird die Fehlergröße bei der Bestimmung der Werte für die Gewichtung derart eingesetzt, dass ein zunehmender Wert der Fehlergröße einer zunehmenden Bedeutung der Abweichung von der bestimmten Aktionsauswahlregel in der Zielfunktion entspricht. Wie bereits erläutert, bedeutet ein großer Wert für die Fehlergröße, dass die Vorhersagen der Betriebs-Zustandssignale durch die Steuereinrichtung nicht gut sind. Es ist also davon auszugehen, dass für diese Zustände der Maschine kein oder kein gutes Training stattgefunden hat. Dementsprechend ist es in einer solchen Situation günstig, die Steuerung so vorzunehmen, dass überwiegend oder sogar ausschließlich das Ziel einer kleinen Abweichung von der bestimmten Aktionsauswahlregel verfolgt wird. Denn die Aktionsauswahlregel kann einem vorgegebenen Steuerablauf entsprechen, welcher in der jeweiligen Situation eine sichere und risikoarme Steuerung der Maschine aufzeigt. Umgekehrt kann ein abnehmender Wert der Fehlergröße einer abnehmenden Bedeutung der Abweichung von der bestimmten Aktionsauswahlregel in der Zielfunktion entsprechen, d.h. die Performanz der Maschine zunehmend gewichtet werden. Dies entspricht dem Grundsatz, dass dann, wenn die Steuereinrichtung den Zustand der Maschine gut vorhersagen kann, ihr ein autarkes Vorgehen orientiert an möglichst hoher Performanz der Maschine zugetraut werden kann.

Zur Berechnung der Fehlergröße können aufeinanderfolgende vergangene Steuerschritte betrachtet werden, d.h. der tatsächlich - vorzugsweiser in jüngerer Vergangenheit - erfolgte Steuerablauf. Für jeden Steuerschritt liegt jeweils ein Betriebs-Zustandssignal und ein daraufhin von der Steuereinrichtung ausgegebenes Betriebs-Steuersignal vor. Für einen bestimmten Steuerschritt wird eine Differenz ermittelt zwischen dem Betriebs-Zustandssignal des auf den bestimmten Steuerschritt folgenden Steuerschrittes und einem von der Steuereinrichtung basierend auf dem Betriebs-Zustandssignal und dem Betriebs-Steuersignal des bestimmten Steuerschrittes vorhergesagten Zustandssignal. Diese Fehlergröße kann für mehrere aufeinanderfolgende Steuerschritte berechnet werden, und die mehreren berechneten Fehlergrößen können dann zu einer Gesamtfehlergröße zusammengefasst werden. Auf diese Weise kann eine Anzahl N von letzten Steuerschritten betrachtet werden und basierend auf dieser Historie der Steuerschritte entschieden werden, welche Gewichtung der beiden Ziele angewandt werden soll. Vorteilhaft ist es, wenn beim Zusammenfassen eine Wichtung der mehreren berechneten Fehlergrößen derart erfolgt, dass weiter in der Vergangenheit liegende Steuerschritte eine geringere Wichtung erhalten. Hierdurch kann berücksichtigt werden, dass sich Umstände seit Beginn der betrachteten Historie geändert haben, weshalb die weiter in der Vergangenheit liegenden Steuerschritte nur eine kleine Rolle für die Entscheidung über die Ausgestaltung der aktuell zu verwendenden Werte für die Gewichtung der beiden Ziele haben sollten.

Die Gewichtung kann mittels eines Parameters zwischen 0 und 1 erfolgen. Ferner kann die Zielfunktion eine gewichtete Linearkombination aus der Performanz der Maschine und der Abweichung von der Aktionsauswahlregel sein, wobei die Wichtungsfaktoren der gewichteten Linearkombination der Parameter, sowie die Zahl 1 minus dem Parameter sind. Dies bedeutet, dass bei einem Parameterwert von 0 bzw. 1 nur das eine bzw. das andere Ziel in die Zielfunktion eingeht, während bei einem Parameterwert von 0.5 beide Ziele gleich stark berücksichtigt werden. Dieser Parameter ist dann der Wert für die Gewichtung, welcher von der Steuereinrichtung bestimmt und angewandt wird.

Bei Berechnung der Linearkombination kann als Performanz eine über mehrere Steuerschritte berechnete Gesamtperformanz und als Abweichung eine über die mehreren Steuerschritte berechnete Gesamtabweichung von der Aktionsauswahlregel eingesetzt werden.

Es können zum Training der Maschine zwei Bestandteile von der Steuereinrichtung genutzt werden, und zwar:

　　ein Performanzbewerter, der anhand eines Betriebs-Zustandssignals und eines Betriebs-Steuersignals eine Performanz der Maschine ermittelt, und
　　ein Aktionsbewerter, der anhand des Betriebs-Zustandssignals und des Betriebs-Steuersignals eine Abweichung von der bestimmten Aktionsauswahlregel ermittelt.

Bei diesen beiden Bestandteilen kann es sich um lernbasierte Agenten handeln, welche zuvor mit den gleichen Trainingsdaten trainiert wurden, welche auch zum Training der Steuereinrichtung eingesetzt werden.

Das erfindungsgemäße Verfahren und/oder eine oder mehrere Funktionen, Merkmale und/oder Schritte des erfindungsgemäßen Verfahrens und/oder einer seiner Ausgestaltungen können computergestützt ablaufen. Es kann beispielsweise mittels eines oder mehrerer Computer, Prozessoren, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden. Es kann auch zumindest teilweise in einer Cloud und/oder in einer Edge-Computing-Umgebung ausgeführt werden. Für den computergestützten Ablauf kommt eines oder mehrere miteinander zusammenwirkende Computerprogramme zum Einsatz. Werden mehrere Programme verwendet, so können diese gemeinsam auf einem Computer gespeichert und von diesem ausgeführt werden, oder auch auf verschiedenen Computern an verschiedenen Orten. Da dies funktional gleichbedeutend ist, wird vorliegend im Singular "das Computerprogramm" und "der Computer" formuliert.

Im Folgenden wird die Erfindung anhand eines Ausführungsbei-spiels näher erläutert. Dabei zeigen:

Figur 1:     eine Steuereinrichtung beim Steuern einer Maschine,

Figur 2:     ein Training eines Steuerungsagenten der Steuereinrichtung,

Figur 3:     ein Ablaufdiagramm.

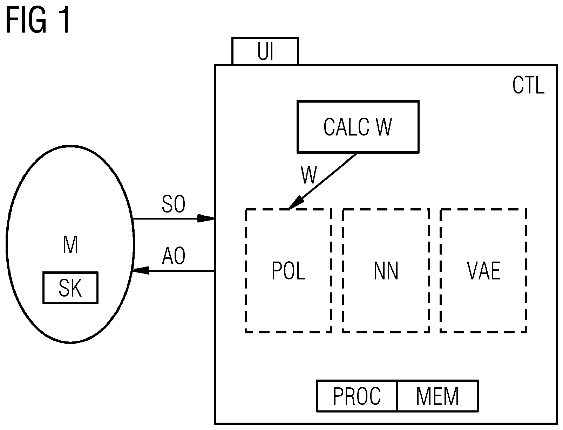

Figur 1 veranschaulicht eine Steuereinrichtung CTL beim Steuern einer Maschine M, z.B. eines Roboters, eines Motors, einer Fertigungsanlage, einer Fabrik, einer Energieversorgungseinrichtung, einer Gasturbine, einer Windturbine, einer Dampfturbine, einer Fräsmaschine oder eines anderen Gerätes oder einer anderen Anlage. Insbesondere kann auch eine Komponente oder ein Teilsystem einer Maschine oder einer Anlage als Maschine M aufgefasst werden. Die Maschine M verfügt über Sensorik SK zum vorzugsweise fortlaufenden Erfassen und/oder Messen von Systemzuständen oder Teilsystemzuständen der Maschine M und gegebenenfalls auch ihrer Umgebung. Die Steuereinrichtung CTL ist in Figur 1 extern zur Maschine M dargestellt und mit dieser gekoppelt. Alternativ kann die Steuereinrichtung CTL auch ganz oder teilweise in die Maschine M integriert sein.

Die Steuereinrichtung CTL verfügt über einen oder mehrere Prozessoren PROC zum Ausführen von Verfahrensschritten der Steuereinrichtung CTL sowie über einen oder mehrere mit dem Prozessor PROC gekoppelte Speicher MEM zum Speichern von Daten, z.B. von von der Steuereinrichtung CTL zu verarbeitenden Informationen, von der Steuereinrichtung CTL empfangenen Informationen, von der Steuereinrichtung CTL ausgegebenen Informationen. Weiterhin weist die Steuereinrichtung CTL einen lernbasierten Steuerungsagenten POL auf, der durch Verfahren des bestärkenden Lernens trainiert oder trainierbar ist. Ein solcher Steuerungsagent wird häufig auch als Policy oder kurz als Agent bezeichnet. Im vorliegenden Ausführungsbeispiel ist der Steuerungsagent POL als künstliches neuronales Netz implementiert. Ferner weist die Steuereinrichtung CTL ein lernbasiertes Transitionsmodell NN und einen lernbasierten Aktionsbewerter VAE auf. Der Steuerungsagent POL, das Transitionsmodell NN und der Aktionsbewerter VAE und damit die Steuereinrichtung CTL werden vorab anhand von vorgegebenen Trainingsdaten datengetrieben trainiert und so zum optimierten Steuern der Maschine M konfiguriert. Das Transitionsmodell NN und der Aktionsbewerter VAE werden nur zum Zweck des Trainings des Steuerungsagenten POL benötigt; das Steuern der Maschine M erfolgt dann durch den trainierten Steuerungsagenten POL, ohne dass das Transitionsmodell NN und der Aktionsbewerter VAE hierfür eingesetzt werden. Eine Ausnahme hiervon stellt die unten erläuterte Berechnung durch den Bestandteil CALC W dar, welche auf das Transitionsmodell NN zugreift.

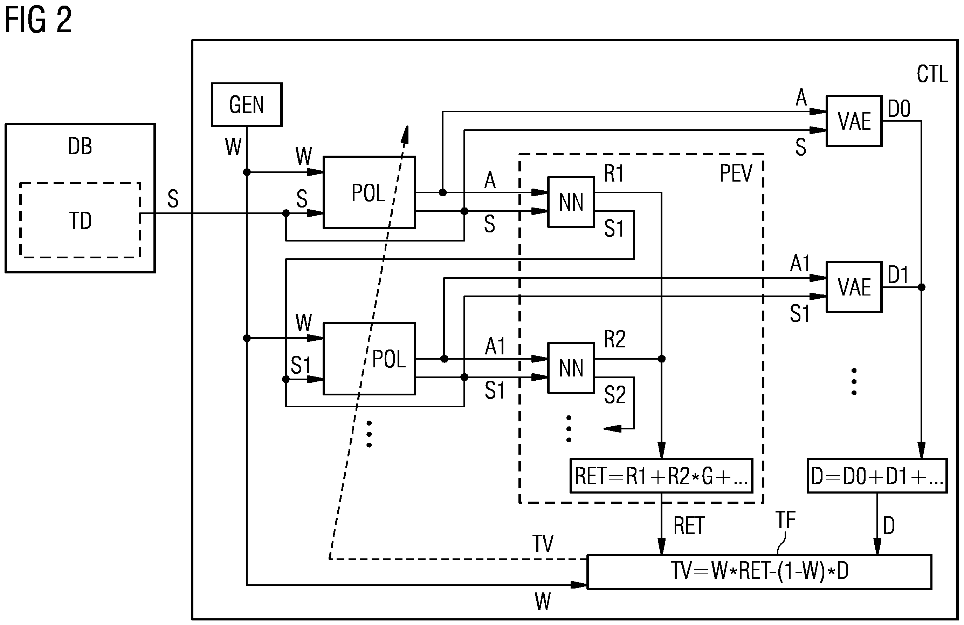

Das Training des Steuerungsagenten POL zielt insbesondere auf zwei Steuerkriterien ab. So soll die vom Steuerungsagenten POL gesteuerte Maschine M einerseits eine möglichst hohe Performanz erzielen, während andererseits zumindest unter manchen Umständen die Steuerung nicht zu sehr von einer Referenz Policy abweichen sollte. Die Performanz der Maschine M kann hierbei z.B. eine Leistung, einen Wirkungsgrad, einen Ressourcenverbrauch, eine Ausbeute, einen Schadstoffausstoß, eine Produktqualität und/oder andere Betriebsparameter der Maschine M betreffen. Bei der Referenz Policy handelt es sich um eine bestimmte Aktionsauswahlregel, also die Vorgabe von Steuersignalen, welche bei Vorliegen bestimmter Zustandssignale ergehen sollen. Eine Referenz Policy kann von einem in der Vergangenheit liegenden Steuern der Maschine M, einer dazu ähnlichen Maschine oder einer Simulation der Maschine M stammen, während diese von einem Referenz-Steuerungsagenten gesteuert wurde. Als Referenz-Steuerungsagent kann vorzugsweise ein überprüfter, validierter und/oder regelbasierter Steuerungsagent verwendet werden. Die Referenz Policy ist wie zu Figur 2 erläutert in den Trainingsdaten enthalten.

Zum optimierten Steuern der Maschine M durch den trainierten Steuerungsagenten POL werden Betriebs-Zustandssignale SO, d.h. im laufenden Betrieb der Maschine M ermittelte Zustandssignale, zur Steuereinrichtung CTL übermittelt. Die Betriebs-Zustandssignale SO spezifizieren jeweils einen Zustand, insbesondere einen Betriebszustand der Maschine M und gegebenenfalls ihrer Umgebung und werden vorzugsweise jeweils durch einen numerischen Zustandswert oder -vektor oder eine Zeitreihe von Zustandswerten oder -vektoren dargestellt. Durch die Betriebs-Zustandssignale SO können Messdaten, Sensordaten, Umgebungsdaten oder andere im Betrieb der Maschine M anfallende oder den Betrieb beeinflussende Daten dargestellt werden. Beispiele sind Daten über eine Temperatur, einen Druck, eine Einstellung, eine Aktorstellung, eine Ventilposition, eine Schadstoffemission, eine Auslastung, einen Ressourcenverbrauch und/oder eine Leistung der Maschine M oder ihrer Komponenten. Bei einer Produktionsanlage können die Betriebs-Zustandssignale SO auch eine Produktqualität oder eine andere Produkteigenschaft betreffen. Die Betriebs-Zustandssignale SO können zumindest teilweise durch die Sensorik SK gemessen werden und/oder mittels eines Simulators der Maschine M simulativ ermittelt werden.

Weiterhin verwendet die Steuereinrichtung CTL einen Gewichtswert W. Durch den Gewichtswert W werden zwei Größen gegeneinander gewichtet, und zwar einerseits die Performanz der Maschine M und andererseits eine Abweichung der Steuerung durch den Steuerungsagenten POL von der Referenz Policy.

Die zur Steuereinrichtung CTL übermittelten Betriebs-Zustandssignale SO werden zusammen mit dem Gewichtswert W in den trainierten Steuerungsagenten POL als Eingabesignale eingespeist. Anhand eines jeweils zugeführten Betriebs-Zustandssignals SO und Gewichtswerts W generiert der trainierte Steuerungsagent POL ein jeweiliges optimiertes Betriebs-Steuersignal AO. Letzteres spezifiziert hierbei eine oder mehrere an der Maschine M vornehmbare Steueraktionen. Die generierten Betriebs-Steuersignale AO werden vom Steuerungsagenten POL bzw. von der Steuereinrichtung CTL zur Maschine M übermittelt. Durch die übermittelten Betriebs-Steuersignale AO wird die Maschine M in optimierter Weise gesteuert, indem die durch die Betriebs-Steuersignale AO spezifizierten Steueraktionen an der Maschine M ausgeführt werden.

Durch den Gewichtswert W kann der trainierte Steuerungsagent POL im laufenden Betrieb der Maschine M sowohl darauf eingestellt werden, bei der Ermittlung von optimierten Betriebs-Steuersignalen AO eine Nähe zur Referenz Policy höher zu gewichten als die Performanz der Maschine M, als auch umgekehrt eine Nähe zur Referenz Policy niedriger zu gewichten als die Performanz der Maschine M. Wie der Gewichtswert W zu diesem Zweck ermittelt wird, wird weiter unten erläutert.

Zunächst wird der Steuerungsagent POL unter Verwendung der Trainingsdaten TD der Datenbank DB trainiert. Diese Trainingsdaten enthalten eine Vielzahl von Datenpunkten, wobei jeder Datenpunkt ein Tupel ist aus einem Zustandssignal, einem Steuersignal, einem Reward für die Durchführung der dem Steuersignal entsprechenden Steueraktion ausgehend vom jeweiligen Zustandssignal - dies ist gleich der Performanz der Maschine nach Durchführung der entsprechenden Steueraktion - , sowie einem Folgezustand, welcher sich aus der Anwendung der jeweiligen dem Steuersignal entsprechenden Steueraktion ergibt. Die gleichen Trainingsdaten TD wurden zuvor auch für das Training des Transitionsmodells NN und des Aktionsbewerters VAE verwendet. Die Trainingsdaten enthalten die Referenz Policy, indem jeder Datenpunkt ein Zustandssignal und ein hierzu gehöriges Steuersignal enthält. Hierbei ist es möglich, dass die gesamte Referenz Policy umfangreicher ist als der in den Trainingsdaten enthaltene Teil. Denn es kann sein, dass durch die Trainingsdaten nicht der gesamte Zustands/Aktionsraum abgedeckt ist, so dass es von dem Erzeuger der Referenz Policy produzierte Paare aus Zustandssignal und Steuersignal gibt, welche nicht Teil der Trainingsdaten sind.

Das Training des Steuerungsagent POL erfolgt derart, dass eine relative Gewichtung der beiden Optimierungskriterien Performanz der Maschine M und Nähe zur Referenz Policy durch den Gewichtswert W im laufenden Betrieb des trainierten Steuerungsagenten POL verändert werden kann. Ein Ablauf dieses Trainings wird mit Bezugnahme auf Figur 2 näher erläutert. Diese Figur veranschaulicht ein Training des Steuerungsagenten POL mittels des trainierten Transitionsmodells NN sowie des trainierten Aktionsbewerters VAE. Zur Illustration aufeinanderfolgender Arbeitsschritte sind in Figur 2 jeweils mehrere Instanzen des Steuerungsagenten POL, des trainierten Transitionsmodells NN sowie des trainierten Aktionsbewerters VAE dargestellt. Die verschiedenen Instanzen können insbesondere verschiedenen Aufrufen oder Auswertungen von Routinen entsprechen, mittels derer der Steuerungsagent POL, das trainierte Transitionsmodell NN bzw. der trainierte Aktionsbewerter VAE implementiert ist.

Das trainierte Transitionsmodell NN, welches insbesondere als künstliches neuronales Netz implementiert sein kann, wurde darauf trainiert, anhand eines jeweiligen Zustandssignals und eines jeweiligen Steuersignals einen aus Anwendung der entsprechenden Steueraktion resultierenden Folgezustand der Maschine M sowie einen daraus resultierenden Performanzwert der Maschine M, den Reward für die Anwendung der entsprechenden Steueraktion, möglichst genau vorherzusagen. Das Training eines solchen Transitionsmodells NN wird z.B. in den Veröffentlichungen EP 3940596 A1 und EP 4235317 A1 beschrieben. Anstelle eines Transitionsmodells NN können auch andersartige Modelle zur Bewertung des Rewards Einsatz finden, z.B. eine Wertfunktion (englisch: value function).

Der trainierte Aktionsbewerter VAE, bei welchem es sich insbesondere um einen variationalen Autoencoder handeln kann, der als feed-forward neuronales Netz implementiert ist, bewertet beliebige Paare aus jeweils einem Zustandssignal und einem Steuersignal, indem für das Paar ein Reproduktionsfehler D ermittelt wird. Der Reproduktionsfehler D ist hierbei ein Maß dafür, wie gut ein Zustandssignal-Steuersignal-Paar durch die Trainingsdaten TD abgedeckt ist, bzw. wie häufig oder wie wahrscheinlich es dort vorkommt. Da die Trainingsdaten TD wie oben erläutert die Referenz Policy enthalten, zeigt der Reproduktionsfehler an, wie stark das Zustands-Steuersignal-Paar von der Referenz Policy abweicht. Das Training eines solchen Aktionsbewerters VAE wird z.B. in den Veröffentlichungen EP 3940596 A1 und EP 4235317 A1 beschrieben, wobei dort die Referenz Policy als vorgegebener Steuerablauf bezeichnet ist.

Wie oben bereits erwähnt, soll der Steuerungsagent POL darauf trainiert werden, zu einem jeweiligen Zustandssignal S der Maschine M ein Steuersignal A auszugeben, das einerseits hinsichtlich einer resultierenden Performanz der Maschine M sowie andererseits hinsichtlich einer Nähe zum bzw. einer Abweichung von der Referenz Policy optimiert ist. Offensichtlich kann die Nähe zur Referenz Policy auch durch eine negativ gewichtete Abweichung von der Referenz Policy dargestellt werden und umgekehrt. Die Optimierung zielt dabei ab auf höhere Performanz und größere Nähe zum bzw. kleinere Abweichung von der Referenz Policy. Die Gewichtung der beiden Optimierungskriterien Performanz und Nähe bzw. Abweichung ist durch den Gewichtswert W einstellbar.

Der Gewichtswert W ist zwischen 0 und 1 einstellbar. Bei einem Gewichtswert von W=1 soll durch den trainierten Steuerungsagenten POL ein ausschließlich die Performanz optimierendes Steuersignal A ausgegeben werden, während bei einem Gewichtswert von W=0 ein ausschließlich die Abweichung von der Referenz Policy minimierendes Steuersignal A ausgegeben werden soll. Bei Gewichtswerten zwischen 0 und 1 sollen die beiden Optimierungskriterien entsprechend anteilig gewichtet werden. Zum Training des Steuerungsagenten POL für unterschiedliche Gewichtswerte werden durch einen Generator GEN der Steuereinrichtung CTL eine Vielzahl von Gewichtswerten W vorzugsweise zufallsbasiert erzeugt, welche im Intervall von 0 bis 1 liegen. Die vom Generator GEN erzeugten Gewichtswerte W werden wie in Figur 2 zu sehen sowohl in den zu trainierenden Steuerungsagenten POL als auch in eine durch das Training zu optimierende Zielfunktion TF eingespeist.

Zum Training des Steuerungsagenten POL werden Zustandssignale S der Trainingsdaten TD in großer Menge als Eingabesignale in den Steuerungsagenten POL eingespeist. Parallel dazu werden diese Zustandssignale S auch in das trainierte Transitionsmodell NN sowie in den trainierten Aktionsbewerter VAE als Eingabesignale eingespeist. Ausgehend vom jeweiligen Zustandssignal S werden durch das trainierte Transitionsmodell NN die aus der Anwendung eines Steuersignals A resultierenden Folgezustände der Maschine M vorhergesagt. Darüber hinaus wird das durch das jeweilige Zustandssignal S und zugehörige Steuersignal A gebildete Paar durch den trainierten Aktionsbewerter VAE bewertet.

Durch den Steuerungsagenten POL wird aus dem jeweiligen Zustandssignal S ein Ausgabesignal abgeleitet und als Steuersignal A ausgegeben. Das Steuersignal A wird dann zusammen mit dem jeweiligen Zustandssignal S in das trainierte Transitionsmodell NN eingespeist, das daraus einen Folgezustand vorhersagt und ein diesen spezifizierendes Folgezustandssignal S1 sowie einen zugehörigen Performanzwert R1 ausgibt. Darüber hinaus wird das Steuersignal A neben dem jeweiligen Zustandssignal S in den trainierten Aktionsbewerter VAE eingespeist, der daraus einen Reproduktionsfehler D0 für das Paar aus Zustandssignal S und Steuersignal A ermittelt und ausgibt. Wie oben erläutert, kann der Reproduktionsfehler als Maß für eine Abweichung von Steuersignalen von der Referenz Policy angesehen werden.

Das Folgezustandssignal S1 wird wiederum in den Steuerungsagenten POL eingespeist, der daraus ein nächstes Steuersignal A1 für diesen Folgezustand ableitet. Das Steuersignal A1 wird zusammen mit dem Folgezustandssignal S1 in das trainierte Transitionsmodell NN eingespeist, das daraus einen weiteren Folgezustand vorhersagt und ein diesen spezifizierendes Folgezustandssignal S2 sowie einen zugehörigen Performanzwert R2 ausgibt. Darüber hinaus wird das Steuersignal A1 zusammen mit dem Folgezustandssignal S1 in den trainierten Aktionsbewerter VAE eingespeist, der daraus einen Reproduktionsfehler D1 für das Paar aus Zustandssignal S1 und Steuersignal A1 ermittelt und ausgibt.

Die vorstehenden Schritte können iterativ wiederholt werden, wobei Performanzwerte und Reproduktionsfehler für weitere Folgezustände ermittelt werden. Die Iteration kann bei Vorliegen einer Abbruchbedingung beendet werden, z.B. bei Überschreiten einer vorgegebenen Anzahl von Iterationen. Auf diese Weise kann eine mehrere Zeitschritte umfassende, von Folgezustand zu Folgezustand weiterschreitende, in die Zukunft extrapolierte Steuertrajektorie mit zugehörigen Performanzwerten R1, R2, ... und Reproduktionsfehlern D0, D1, ... ermittelt werden. Eine solche Extrapolation wird häufig auch als Roll-Out oder virtueller Roll-Out bezeichnet.

Aus den Performanzwerten R1, R2, ... einer jeweiligen Steuertrajektorie wird eine über mehrere Zeitschritte kumulierte Gesamtperformanz RET dieser Steuertrajektorie ermittelt. Eine solche kumulierte Gesamtperformanz wird beim bestärkenden Lernen als Return bezeichnet. Die Gesamtperformanz RET wird vorzugsweise dem jeweiligen Zustandssignal S am Anfang der jeweiligen Steuertrajektorie zugeordnet und bewertet so eine Fähigkeit des Steuerungsagenten POL, zum jeweiligen Zustandssignal S ein Steuersignal A zu ermitteln, das eine über mehrere Zeitschritte performante Steuersequenz einleitet. Zur Ermittlung der Gesamtperformanz RET werden die für zukünftige Zeitschritte ermittelten Performanzwerte R1, R2, ... diskontiert, d.h. mit für jeden Zeitschritt kleiner werdenden Gewichten versehen. Als konkretes Beispiel kann die Gesamtperformanz RET als gewichtete Summe der Performanzwerte R1, R2, ... berechnet werden, deren Gewichte einem mit jedem Zeitschritt in die Zukunft kleiner werdenden Diskontierungsfaktor < 1 entsprechen. Auf diese Weise kann die Gesamtperformanz RET z.B. ermittelt werden gemäß $RET = R1 + R2{*}G + R3{*}G^2 + R4{*}G^3 + \dots$. Für G kann z.B.

ein Wert von 0,99, 0,9, 0,8 oder 0,5 eingesetzt werden. Alternativ kann die Gesamtperformanz auch ohne Diskontierung berechnet werden bzw. ein Diskontierungsfaktor von 1 verwendet werden.

Das Transitionsmodell NN sowie das vorstehende Diskontierungsverfahren bilden zusammen den Performanzbewerter PEV, der anhand von Steuersignalen A, A1, ... und Zustandssignalen S, S1, ... eine aus Anwendung der Steuersignale resultierende Gesamtperformanz RET der Maschine M ermittelt. Alternativ oder zusätzlich kann der Performanzbewerter PEV auch mittels eines Q-Learning-Verfahrens realisiert und darauf trainiert werden, die über einen zukünftigen Zeitraum kumulierte Gesamtperformanz RET zu ermitteln.

Weiterhin wird aus den Reproduktionsfehlern DO, D1, ... der jeweiligen Steuertrajektorie ein über mehrere Zeitschritte kumulierter Gesamt-Reproduktionsfehler D ermittelt. Letzterer dient im weiteren Verfahren als Maß für die Abweichung dieser Steuertrajektorie von der Referenz Policy. Im vorliegenden Ausführungsbeispiel wird der Gesamt-Reproduktionsfehler D als Summe über die einzelnen Reproduktionsfehler DO, D1, ... ermittelt gemäß D = D0 + D1 + ....

Die jeweils ermittelte Gesamtperformanz RET und der jeweils ermittelte Gesamt-Reproduktionsfehler D werden beide in die zu optimierende Zielfunktion TF eingespeist. Durch die Zielfunktion TF werden die Gesamtperformanz RET und der Gesamt-Reproduktionsfehler D mit dem jeweiligen Gewichtswert W gewichtet, der auch zusammen mit dem jeweiligen Zustandssignal S in den Steuerungsagenten POL eingespeist wurde. Durch ein die Zielfunktion TF optimierendes Training kann der Steuerungsagent POL also darauf trainiert werden, bei Eingabe eines Zustandssignals S und eines Gewichtswerts W ein Steuersignal A auszugeben, das die Zielfunktion TF gemäß dem eingegebenen Gewichtswert W zumindest im Mittel optimiert.

Im vorliegenden Ausführungsbeispiel ermittelt die Zielfunktion TF aus der Gesamtperformanz RET, dem Gesamt-Reproduktionsfehler D, sowie dem Gewichtswert W einen Zielwert TV der Zielfunktion TF gemäß TV = W*RET - (1-W)*D. Da angestrebt wird, dass die Steuertrajektorie der Referenz Policy möglichst nahe ist, geht der Gesamt-Reproduktionsfehler D in den Zielwert TV mit negativem Vorzeichen ein. Gegebenenfalls kann die Gesamtperformanz RET und/oder der Gesamt-Reproduktionsfehler D vor Berechnung des Zielwerts TV noch mit einem jeweils konstanten Normierungsfaktor versehen werden.

Der ermittelte Zielwert TV wird dem jeweiligen Zustandssignal S am Anfang der jeweiligen Steuertrajektorie zugeordnet. Der jeweilige Zielwert TV bewertet so eine aktuelle Fähigkeit des Steuerungsagenten POL, zum jeweiligen Zustandssignal S eine entsprechend dem Gewichtswert W sowohl performanzoptimierende als auch der Referenz Policy nahe Steuersequenz einzuleiten. Zum Trainieren des Steuerungsagenten POL, d.h. zum Optimieren seiner Verarbeitungsparameter, werden die ermittelten Zielwerte TV -wie in Figur 2 durch einen strichlierten Pfeil angedeutet - zum Steuerungsagenten POL zurückgeführt. Die Verarbeitungsparameter des Steuerungsagenten POL werden dabei so eingestellt bzw. konfiguriert, dass die Zielwerte TV zumindest im Mittel maximiert werden. Zur konkreten Durchführung des Trainings kann dabei auf eine Vielzahl von effizienten Standardverfahren, insbesondere den stochastischen Gradientenabstieg, populationsbasierte Optimierungsverfahren, oder andere Methoden des überwachten (supervised) Lernens, zurückgegriffen werden.

Nach erfolgreichem Training des Steuerungsagenten POL kann dieser, wie zu Figur 1 beschrieben, zum optimierten Steuern der Maschine M verwendet werden. Hierzu benötigt der trainierte Steuerungsagent POL ein Betriebs-Zustandssignal und einen Gewichtswert W und gibt basierend hierauf ein Betriebs-Steuersignal aus. Dabei kann die Gewichtung der Optimierungskriterien Performanz und Nähe zur Referenz Policy im laufenden Betrieb eingestellt und verändert werden. Auf diese Weise kann die Steuerung der Maschine M darauf abgestimmt werden, ob eher die Performanz oder die Zuverlässigkeit höher gewichtet werden soll. Eine geeignete Einstellung dieser Gewichtung während der Laufzeit, also nach Training und Deployment der Steuereinrichtung CTL, wird im Folgenden beschrieben. Hierfür wird der Bestandteil CALC W der Steuereinrichtung CTL verwendet, welcher den Gewichtswert W berechnet und dem Steuerungsagent POL zur Steuerung der Maschine M zur Verfügung stellt.

Wie beschrieben ist die beim Training verwendete Zielfunktion TF eine Linearkombination aus der Gesamtperformanz RET, welche den Return des Steuerungsagenten POL darstellt, und dem Gesamt-Reproduktionsfehler D, welcher einen Bestrafungsterm darstellt. Der Faktor, welcher die Balance zwischen diesen beiden Komponenten einstellt, ist der Gewichtswert W, welcher somit einen den Ausgleich kontrollierenden Hyperparameter darstellt. Da keine Wechselwirkung mit der Maschine M vor dem Beginn des tatsächlichen Einsatzes des Steuerungsagenten POL, dem Deployment, stattfindet, kann schwer abgeschätzt werden, welcher Gewichtswert W der am besten geeignete ist. Insbesondere wird ein Nutzer Schwierigkeiten haben, dem Steuerungsagenten POL einen zu verwendenden Gewichtswert W vorzugeben. Dies führt üblicherweise dazu, dass entweder zu konservativ vorgegangen wird, indem stark an der Referenz Policy orientiert gesteuert wird; dies bedeutet, dass keine Verbesserung der Steuerung gegenüber dem bekannten Ablauf stattfindet. Im gegenteiligen Fall würde zu riskant vorgegangen werden, indem die Orientierung an der Referenz Policy vernachlässigt und stattdessen nur auf die Performanz der Maschine fokussiert wird, was bei Zustandssignalen, welche nicht stark in den Trainingsdaten repräsentiert sind, gefährlich sein kann. Denn gerade solche wenig im Training vorkommenden Zustandssignale können eher selten vorkommenden sicherheitskritischen Betriebsphasen der Maschine M entsprechen. In diesen Situationen ist es sinnvoll, der Referenz Policy zu folgen, der einen Ausweg aus der sicherheitskritischen Betriebsphase aufzeigt.

Es soll daher der Gewichtswert W automatisch angepasst werden, so dass ein möglichst guter Ausgleich zwischen den beiden Zielen der hohen Performanz und des Folgens der Referenz Policy eingestellt wird. Dieses Anpassen des Gewichtswerts W ist besser als die Wahl eines konstanten Wertes, denn abhängig vom Zustand, in welchem sich die Maschine M und ihre Umgebung befinden, erweist sich eine andere Steuerung als vorteilhaft: wenn die aktuelle Situation einem Zustand entspricht, welcher der Steuereinrichtung CTL häufig während dem Training präsentiert wurde, kann der Steuerungsagent POL riskanter vorgehen und einen höheren Return erzielen, da davon auszugehen ist, dass die Steuereinrichtung CTL aufgrund des durchlaufenen Trainings weiß, wie vorzugehen ist. Wenn die aktuelle Situation hingegen einem Zustand entspricht, welcher der Steuereinrichtung CTL aus dem Training gar nicht oder kaum bekannt ist, sollte konservativ vorgegangen werden und die Maschine M möglichst strikt an der Referenz Policy orientiert gesteuert werden.

Um eine automatische Einstellung des Gewichtswerts W zu ermöglichen, werden Informationen genutzt, welche während der Laufzeit verfügbar werden. Hierbei handelt es sich zum einen um die Betriebs-Zustandssignale SO der Figur 1, in den folgenden Formeln mit $s_i$ angegeben, wobei i die Zeit indiziert. Ferner handelt es sich um die Betriebs-Steuersignal AO der Figur 1, in den folgenden Formeln mit $a_i$ angegeben, wobei i die Zeit indiziert. Schließlich wird noch der aus einem Steuersignal AO resultierende Reward verwendet, in den folgenden Formeln mit $r_i$ angegeben, wobei i die Zeit indiziert. Der Reward entspricht bei dem anhand von Figur 2 erläuterten Training der Größe R1, R2, ...; jedoch wird der Reward im Gegensatz zum Training nicht durch das Transitionsmodell NN vorhergesagt, sondern ergibt sich aus dem gemessenen Zustand der Maschine.

Mit $h_t$ wird die Historie der Interaktionen während der Laufzeit über eine bestimmte Anzahl t von Zeitschritten bezeichnet: $h_t =< s_0, a_0, r_0, s_1, a_1, r_1, ..., s_{t-1}, a_{t-1}, r_{t-1}, s_t >$. Wie lange die betrachtete Historie ist, d.h. wie groß t ist, hängt von der Trägheit des Systems ab. Beispielsweise kann t ca 10 betragen, wenn sich Effekte schnell auswirken, und ca 1000, wenn sie sich sehr langsam auswirken. Die Länge eines Zeitschritts, also der Zeitabstand zwischen einem Tripel $s_i$, $a_i$, $r_i$ und dem darauffolgenden Tripel $s_{i+1}$, $a_{i+1}$, $r_{i+1}$ kann beispielsweise Sekunden bis Minuten betragen.

Ein Teil der Steuereinrichtung CTL ist das trainierte Transitionsmodell NN. Zur Bestimmung des Gewichtswertes W wird geprüft, inwiefern die tatsächlich beobachteten Übergänge zwischen den Zustandssignalen mit den Vorhersagen des Transitionsmodells NN übereinstimmen. Dies erfolgt durch einen Vergleich der realen Zustandssignale mit denjenigen, welche das Transitionsmodell NN basierend auf dem jeweils vorhergehenden Zustandssignal und dem vom Steuerungsagent POL ausgegebenen Steuersignal ermittelt:

$$e_t = \frac{1}{N} \sum_{i=0}^{t-1} \left( s_{i+1} - \hat{T}(s_i, a_i) \right)^2$$

Hierbei steht $\hat{T}$ für das trainierte Transitionsmodell NN und $e_t$ gibt den quadratischen Gesamtfehler bezogen auf die Historie $h_t$ an. $\hat{T}(s_i, a_i)$ ist das Zustandssignal, welches das Transitionsmodell NN ausgehend von einem Zustandssignal-Steuersignal-Paar $s_i$, $a_i$ vorhersagt. $s_{i+1}$ ist das tatsächlich an der Maschine ermittelte nächste Zustandssignal, folgend auf das Zustandssignal $s_i$. Mittels des Klammerausdrucks wird somit das prädizierte Zustandssignal mit dem dem tatsächlich eingetretenen Zustand entsprechenden Zustandssignal verglichen. N ist die Anzahl der vollständigen Tripel $s_i$, $a_i$, $r_i$ in $h_t$.

Dieser quadratische Gesamtfehler $e_t$ kann dem weiteren Vorgehen zugrunde gelegt werden. Alternativ hierzu ist es möglich, dass zusätzlich zur Überprüfung der Vorhersagen des Transitionsmodells NN in Bezug auf die Zustandssignale auch eine Überprüfung der Vorhersagen des Transitionsmodells NN in Bezug auf den Reward $r_i$ erfolgt. Dies kann mathematisch entweder dadurch realisiert werden, dass in obiger Formel anstelle der Zustandssignale der Reward betrachtet wird, d.h. jeweils ein Paar bestehend aus Zustandssignal und Reward verwendet wird, oder dadurch, dass für den Reward ein eigener quadratische Gesamtfehler $e_t$ entsprechend der Berechnung des Gesamtfehlers $e_t$ für das Zustandssignal berechnet wird und diese beiden Gesamtfehler dann kombiniert werden.

Wenn der berechnete Gesamtfehler niedrig ist, ist das Transitionsmodell NN in der Lage, das Verhalten der Maschine im Zeitraum der betrachteten Historie gut einzuschätzen. Wenn der berechnete Gesamtfehler hingegen hoch ist, trifft dies nicht zu. Dieser Gesamtfehler soll nun verwendet werden, um einen geeigneten Gewichtswert W einzustellen. Da der Fehler nach unten hin durch Null begrenzt wird, jedoch nach oben keine Grenze aufweist, wird eine Abbildung des Gesamtfehlers vom Bereich $(0, \infty)$, in welchem Wertebereich aufgrund obiger Formel liegen kann, auf den Bereich $(0,1)$ des Gewichtswertes W berechnet.

Eine solche Abbildung der Bereiche kann erfolgen über $\lambda = f(e_t) = 1/(1 + e_t)$. Kleine Werte für den Fehler $e_t$ führen zu Werten für $\lambda$ nahe 1, während hohe Fehlerwerte $\lambda$ in die Nähe von 0 bringen. Somit kann die Größe $\lambda$ als Gewichtswert W eingesetzt werden. Denn bei kleinen Werten für den Fehler $e_t$ arbeitet das Transitionsmodell zuverlässig, weswegen versucht werden sollte, eine freie Optimierung bei der Steuerung zu ermöglichen, d.h. es wird eine möglichst hohe Performanz der Maschine angestrebt und die Orientierung an der Referenz Policy ist wenig wichtig. Bei großen Werten für den

Fehler $e_t$ arbeitet das Transitionsmodell nicht zuverlässig, weshalb eine stark auf die Performanz ausgerichtete Steuerung der Maschine riskant wäre; in diesem Fall bewirkt der Gewichtswert W, dass die Steuerung regularisiert wird, indem stark an der Referenz Policy orientiert vorzugehen ist.

Es ist möglich, dass in der Historie $h_t$ Zustandssignale vorhanden sind, welche die aktuelle Situation nicht mehr gut beschreiben. Dies trifft umso mehr zu, je älter die Werte sind, d.h. je weiter sie vom gegenwärtigen Zeitpunkt entfernt sind. Entsprechend der Notation der Historie $h_t = < s_0, a_0, r_0, s_1, a_1, r_1, ... , s_{t-1}, a_{t-1}, r_{t-1}, s_t >$ betrifft dies somit umso mehr Zustandssignale, je näher sie sich am Anfang der Historie befinden. Falls Expertenwissen über die Anzahl der in Bezug auf die Gegenwart relevanten Zustandssignale existiert, kann die Historie auf diese letzten Zeitpunkte beschränkt werden. Da dies üblicherweise nicht gegeben sein wird, kann eine Wichtung der Einzelfehler mittels einer abnehmenden Exponentialfunktion stattfinden:

$$e_t = \frac{1}{N} \sum_{i=0}^{t} \exp\left(\frac{i-t}{\tau}\right) \left(s_{i+1} - \hat{T}(s_i, a_i)\right)^2$$

Je weiter der Zeitpunkt des Zustandssignals $s_i$ sich also am Beginn der Historie befindet, desto kleiner ist der Wert von i - t und somit der Exponentialfunktion, desto weniger trägt also der jeweilige Einzelfehler zum Gesamtfehler $e_t$ bei. $\tau$ ist hierbei ein konstanter Parameter, welcher die Stärke des Abfalls der Exponentialfunktion bestimmt. Obige Ausführungen zum Gesamtfehler bezogen auf das Einbeziehen des Reward $r_i$ gelten entsprechend.

Wie beschrieben, berechnet der Bestandteil CALC W der Steuereinrichtung CTL den Gewichtswert W und stellt ihn dem Steuerungsagenten POL zur Verfügung. Die Berechnung des Gewichtswerts kann hierbei kontinuierlich erfolgen, indem die Historie ein gleitendes Fenster darstellt, so dass zu jedem neuen Zeitpunkt ein neues Tripel $s_i, a_i, r_i$ an das Ende der Historie gesetzt wird und das vormals am Anfang stehende Tripel gelöscht wird. Somit kann zu jedem neuen Zeitpunkt ein neuer Wert für den Gewichtswert W bestimmt und dem Steuerungsagenten POL zur Verfügung gestellt werden. Alternativ ist es möglich, den Gewichtswert W seltener zu bestimmen, z.B. indem t Zeitpunkte abgewartet werden, bis eine vollständig neue Historie vorliegt, und basierend auf dieser neuen Historie eine Berechnung stattfinden zu lassen.

Das beschriebene Vorgehen ermöglicht eine automatische und selbständige Berechnung des Gewichtswertes W in der Steuereinrichtung CTL, ohne dass eine Interaktion mit einem Nutzer nötig ist. Der Eingriff eines Nutzers durch Vorgabe eines Gewichtswertes W ist jedoch möglich. Wenn also ein Nutzer die Art der Steuerung als nachteilig ansieht, ist es möglich, dass er die Kontrolle insofern übernimmt, als er über eine Nutzerschnittstelle UI der Steuereinrichtung CTL einen zu verwenden Gewichtswertes W vorgibt.

Dadurch, dass der Nutzer nicht dafür benötigt wird, den Gewichtswert W für die Steuerung der Maschine vorzugeben, wird die rare Zeit eines Experten gespart, welcher aufwendig und basierend auf umfassender Erfahrung versuchen müsste, einen der jeweiligen Situation angepassten Gewichtswert zu ermitteln und einzugeben. Vielmehr erfolgt eine automatische Bestimmung des Gewichtswerts, welche kontinuierlich oder von Zeit zu Zeit basierend auf der aktualisierten Historie wiederholt wird. Es ist möglich, dass der Nutzer die Frequenz der Neuberechnungen des Gewichtswerts über die Nutzerschnittstelle UI eingibt. Auf diese Weise kann z.B. der Beobachtung des Nutzers, dass sich Bedingungen in verändertem Tempo anpassen, Rechnung getragen werden.

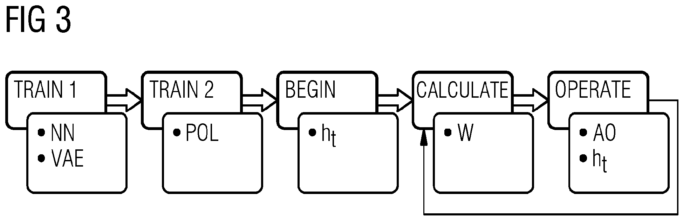

Zusammenfassend zeigt Figur 3 ein Ablaufdiagramm zu dem geschilderten Vorgehen. In einem dem Einsatz der Steuereinrichtung CTL zum Steuern der Maschine vorgelagerten Trainingsschritt TRAIN 1 werden zunächst das Transitionsmodell NN und der Aktionsbewerter VAE unter Verwendung von Trainingsdaten trainiert. In einem weiteren vorgelagerten Trainingsschritt TRAIN 2 wird dann der Steuerungsagent POL unter Verwendung der gleichen Trainingsdaten und mit Hilfe des trainierten Transitionsmodells NN und des trainierten Aktionsbewerters VAE trainiert. Nach dem Deployment beginnt im Schritt BEGIN die Steuereinrichtung mit den drei trainierten Einheiten, dem Transitionsmodell NN, dem Aktionsbewerter VAE, sowie dem Steuerungsagent POL, die Steuerung der Maschine. Nach einer Anfangszeit liegen somit die Daten der Historie $h_t$ vor. Basierend hierauf wird im Schritt CALCULATE der Gewichtswert W berechnet, welcher dann im regulären Steuerbetrieb OPERATE zur Steuerung durch den Steuerungsagent POL eingesetzt wird, welcher Steuersignale AO an die Maschine ausgibt. Hiermit ist eine aktualisierte Historie $h_t$ erstellbar, welche wiederum im Schritt CALCULATE zur Berechnung eines aktualisierten Gewichtswerts W verwendet werden kann, usw.

Vorteilhaft kann es sein, für die Anfangszeit, in welcher noch keine Historie $h_t$ vorliegt, ein Verhalten zu definieren. Man könnte z.B. zu Beginn W=0 verwenden, um auf der sicheren Seite zu sein, d.h. strikt nach der Referenz Policy zu steuern, oder z.B. einen Wert wie W=0.5, wenn Sicherheit keine große Rolle spielt.

Die Erfindung wurde voranstehend an einem Ausführungsbeispiel beschrieben. Es versteht sich, dass zahlreiche Änderungen und Modifikationen möglich sind, ohne dass der Rahmen der Erfindung verlassen wird.

**Patentansprüche**

1. Computerimplementiertes Verfahren zum Steuern einer Maschine (M) mittels einer trainierten lernbasierten Steuereinrichtung (CTL),

wobei das Training der Steuereinrichtung (CTL) unter Verwendung einer Zielfunktion erfolgt ist, welche eine Gewichtung einer Performanz der Maschine (M) gegenüber einer Abweichung von einer bestimmten Aktionsauswahlregel beinhaltet,

bei dem die zuvor trainierte Steuereinrichtung (CTL) zur Steuerung der Maschine (M) basierend auf ihr zur Verfügung gestellten Betriebs-Zustandssignalen (SO) der Maschine (M) und Werten für die Gewichtung Betriebs-Steuersignale (AO) ermittelt und ausgibt, wobei diese Werte für die Gewichtung von der Steuereinrichtung (CTL) bestimmt werden, indem

eine Fehlergröße berechnet wird betreffend eine Vorhersage von Zustandssignalen durch die Steuereinrichtung (CTL) gegenüber Betriebs-Zustandssignalen (SO) der Maschine (M).

2. Verfahren nach Anspruch 1, bei dem
die Fehlergröße bei der Bestimmung der Werte für die Gewichtung derart eingesetzt wird, dass ein zunehmender Wert der Fehlergröße einer zunehmenden Bedeutung der Abweichung von der bestimmten Aktionsauswahlregel in der Zielfunktion entspricht.

3. Verfahren nach Anspruch 1 oder 2, bei dem

zur Berechnung der Fehlergröße aufeinanderfolgende vergangene Steuerschritte betrachtet werden,

wobei für jeden Steuerschritt jeweils ein Betriebs-Zustandssignal (SO) und ein daraufhin von der Steuereinrichtung (CTL) ausgegebenes Betriebs-Steuersignal (AO) vorliegt,

für einen bestimmten Steuerschritt eine Differenz ermittelt wird zwischen dem Betriebs-Zustandssignal (SO) des auf den bestimmten Steuerschritt folgenden Steuerschrittes und einem von der Steuereinrichtung (CTL) basierend auf dem Betriebs-Zustandssignal (SO) und dem Betriebs-Steuersignal (AO) des bestimmten Steuerschrittes vorhergesagten Zustandssignal.

4. Verfahren nach Anspruch 3, bei dem

die Fehlergröße für mehrere aufeinanderfolgende Steuerschritte berechnet wird, und
die mehreren berechneten Fehlergrößen zu einer Gesamtfehlergröße zusammengefasst werden.

5. Verfahren nach Anspruch 4, bei dem
beim Zusammenfassen eine Wichtung der mehreren berechneten Fehlergrößen derart erfolgt, dass weiter in der Vergangenheit liegende Steuerschritte eine geringere Wichtung erhalten.

6. Verfahren nach einem der Ansprüche 1 bis 5, bei dem

die Gewichtung mittels eines Parameters zwischen 0 und 1 erfolgt, und
die Zielfunktion eine gewichtete Linearkombination ist aus der Performanz der Maschine (M) und der Abweichung von der Aktionsauswahlregel,
wobei die Wichtungsfaktoren der gewichteten Linearkombination der Parameter, sowie die Zahl 1 minus dem Parameter sind.

7. Verfahren nach einem der Ansprüche 1 bis 6, bei dem
bei Berechnung der Linearkombination als Performanz eine über mehrere Steuerschritte berechnete Gesamtperformanz und als Abweichung eine über die mehreren Steuerschritte berechnete Gesamtabweichung von der Aktionsauswahlregel eingesetzt werden.

8. Verfahren nach einem der Ansprüche 1 bis 7, bei dem zum Training

ein Performanzbewerter (PEV) eingesetzt wird, der anhand eines Betriebs-Zustandssignals (SO) und eines Betriebs-Steuersignals (AO) eine Performanz der Maschine (M) ermittelt, und
ein Aktionsbewerter (VAE) eingesetzt wird, der anhand des Betriebs-Zustandssignals (SO) und des Betriebs-Steuersignals (AO) eine Abweichung von der bestimmten Aktionsauswahlregel ermittelt.

9. Verfahren nach einem der vorhergehenden Ansprüche, **dadurch gekennzeichnet, dass** die Maschine (M) ein Roboter, ein Motor, eine Fertigungsanlage, eine Fabrik, eine Energieversorgungseinrichtung, eine Gasturbine, eine Windturbine, eine Dampfturbine, eine Fräsmaschine oder ein anderes Gerät oder eine andere Anlage ist.

10. Steuereinrichtung (CTL) zum Steuern einer Maschine (M), eingerichtet zum Ausführen eines Verfahrens nach einem der Ansprüche 1 bis 9.

11. Computerprogramm, umfassend Befehle, die bei der Ausführung des Programms durch einen Computer diesen veranlassen, die Schritte des Verfahrens nach einem der Ansprüche 1 bis 9 auszuführen.

12. Computerlesbares Speichermedium (MEM) mit einem Computerprogramm nach Anspruch 11.

13. Übertragungssignal, das das Computerprogramm

**EP 4 600 765 A1**

nach Anspruch 11 überträgt.

# FIG 1

# FIG 2

EP 4 600 765 A1

FIG 3

| TRAIN 1 | TRAIN 2 | BEGIN | CALCULATE | OPERATE |
|---|---|---|---|---|
| • NN<br>• VAE | • POL | • $h_t$ | • W | • AO<br>• $h_t$ |

Europäisches
Patentamt

European
Patent Office

Office européen
des brevets

# EUROPÄISCHER RECHERCHENBERICHT

Nummer der Anmeldung

EP 24 15 6540

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 4 235 317 A1 (SIEMENS AG [DE]) 30. August 2023 (2023-08-30) <br> * Absatz [0001] * <br> * Absatz [0006] * <br> * Absatz [0031] - Absatz [0033] * <br> * Absatz [0042] * <br> * Absatz [0048] * <br> * Absatz [0059] - Absatz [0060] * <br> * Absatz [0075] - Absatz [0078] * <br> - - - - - | 1-13 | INV. <br> G05B13/02 <br><br> ADD. <br> B25J9/16 |

RECHERCHIERTE SACHGEBIETE (IPC)

G05B
B25J

Der vorliegende Recherchenbericht wurde für alle Patentansprüche erstellt

| Recherchenort | Abschlußdatum der Recherche | Prüfer |
|---|---|---|
| Den Haag | 8. Juli 2024 | Lefeure, Guillaume |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 15 6540

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-07-2024

| Im Recherchenbericht angeführtes Patentdokument | Datum der Veröffentlichung | Mitglied(er) der Patentfamilie | Datum der Veröffentlichung |
|---|---|---|---|
| EP 4235317 A1 | 30-08-2023 | EP 4235317 A1 | 30-08-2023 |
| | | WO 2023160952 A1 | 31-08-2023 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3940596 A1

- EP 4235317 A1